# FASCICULE DE BREVET EUROPEEN

(11) **EP 3 097 151 B1**
(45) Date de publication et mention de la délivrance du brevet: **06.01.2021**
(21) Numéro de dépôt: 15705647.4
(22) Date de dépôt: 21.01.2015
(51) Int. Cl.: C08L 95/00, C08L 91/00, C04B 26/26, C04B 24/24, C08L 93/00, E01C 7/26, C04B 111/00, C04B 111/20, C04B 111/27, C04B 40/00

(54) **MÉLANGES PRIMAIRES BITUME-POLYMÈRE, UTILES POUR LA PRÉPARATION DE LIANTS BITUME-POLYMÈRE, PRODUITS OBTENUS A PARTIR DE CES MÉLANGES PRIMAIRES**
POLYMER-BITUMENPRIMÄRMISCHUNGEN ZUR HERSTELLUNG VON POLYMER-BITUMENBINDEMITTEL UND AUS DIESEN PRIMÄRMISCHUNGEN HERGESTELLTE PRODUKTE
POLYMER-BITUMEN PRIMARY MIXTURES THAT CAN BE USED FOR PREPARING POLYMER-BITUMEN BINDERS, AND PRODUCTS OBTAINED FROM THESE PRIMARY MIXTURES

(30) Priorité: 21.01.2014 FR 1450448
(43) Date de publication de la demande: 30.11.2016
(73) Titulaire: Eiffage Infrastructures, 78140 Vélizy-Villacoublay (FR)
(72) Inventeur: LOUP, Frédéric, F-69100 Villeurbanne (FR)
(74) Mandataire: Plasseraud IP
(86) Numéro de dépôt international: PCT/FR2015/050142
(87) Numéro de publication internationale: WO 2015/110754

(56) Documents cités:
- WO-A1-94/10256
- WO-A1-2005/087869
- WO-A1-2007/095707
- JP-A- 2009 040 827
- KR-B1- 101 123 783
- US-A- 5 965 626
- US-A1- 2006 089 431
- MICHIKO FUJITA ET AL: "Miscibility between natural rubber and tackifiers. I. Phase diagrams of the blends of natural rubber with rosin and terpene resins", JOURNAL OF APPLIED POLYMER SCIENCE, vol. 64, no. 11, 13 juin 1997 (1997-06-13) , pages 2191-2197, XP055153364, ISSN: 0021-8995, DOI: 10.1002/(SICI)1097-4628(19970613)64:11<219 1::AID-APP15>3.3.CO;2-I
- Anonymous: "Piccotac(TM) 1095-N Hydrocarbon Resin, Product data", , 1 novembre 2005 (2005-11-01), pages 1-2, XP055153416, Extrait de l'Internet: URL:www.eastman.com [extrait le 2014-11-17]
- Anonymous: "Eastoflex, amorphous polyolefins, WA4", , 1 août 2013 (2013-08-01), pages 1-8, XP055153528, Extrait de l'Internet: URL:http://www.eastman.com/Literature_Cent er/W/WA4.pdf [extrait le 2014-11-18]
- G. MARIN ET AL: "Rheology and Adherence of Pressure-Sensitive Adhesives", THE JOURNAL OF ADHESION, vol. 82, no. 5, 1 juin 2006 (2006-06-01), pages 469-485, XP055153417, ISSN: 0021-8464, DOI: 10.1080/00218460600713618

## Description

### Domaine de l'invention

L'invention relève du domaine des liants bitumineux ou émulsions de liants bitumineux, en particulier des bitumes modifiés par au moins un polymère, ci-après également dénommés liants bitume-polymère ou bitumes modifiés. Ces liants sont utilisables pour la réalisation de revêtements routiers ou dans des applications industrielles (isolation-amortissement-étanchéité).

En particulier, l'invention se rapporte à un mélange primaire destiné à être mélangé à du bitume pour préparer un liant modifié au polymère, puis éventuellement dans un second temps une émulsion de bitume-polymère.

L'invention concerne également la fabrication de ces produits.

### Arrière-plan technologique de l'invention

Les liants bitumineux peuvent être soit des liants bitumineux anhydres, soit des émulsions bitumineuses. Ces dernières sont préparées par mise en dispersion de liants bitumineux anhydres dans une phase aqueuse, en présence d'émulsifiants.

Les liants bitume-polymère peuvent être réticulés, classiquement au moyen de soufre ou ses dérivés.

Les liants bitumineux "routiers" exercent leur fonction liante, au sein :
- des "enrobés à chaud" obtenus par mélange à chaud de liants bitumineux anhydres avec des granulats, ces mélanges étant ensuite répandus sur la chaussée pour former des revêtements routiers ;
- des "enduits superficiels aux liants anhydres" obtenus par épandage à chaud sur la chaussée tout d'abord d'une émulsion de liants bitumineux puis ensuite de granulats ;
- des "enrobés à froid" obtenus par mélange à froid d'émulsions bitumineuses avec des granulats, ces mélanges étant ensuite répandus sur la chaussée pour former des revêtements routiers ;
- ou des "enduits superficiels aux émulsions bitumineuses" obtenus par épandage à froid sur la chaussée tout d'abord d'émulsions bitumineuses puis ensuite de granulats.

Ces enrobés ou enduits doivent tout d'abord former un mélange homogène comprenant une matrice bitumineuse et des granulats dispersés au sein de cette matrice. La rhéologie de ce mélange doit être adaptée à l'application sur les chaussées pour former un revêtement routier.

Une fois appliqués, ces enrobés ou enduits doivent ensuite monter en cohésion pour se transformer en un revêtement routier doté des propriétés mécaniques durables attendues.

Le chauffage, la mise en émulsion et/ou le fluxage (ou fluidification) à l'aide de solvants du bitume (fluxants) sont des moyens couramment utilisés pour obtenir la consistance souhaitable pour l'application.

Le chauffage et l'utilisation de fluxants d'origine pétrolière chargés en Composés Organiques Volatils (COV) ont des répercussions environnementales négatives.

Une amélioration a été apportée à la fluidification par fluxage par le biais de l'EP900822B1 qui propose des fluxants pour liants bitumineux constitués par un ou plusieurs monoesters méthyliques d'acides gras en C16-C18, en particulier d'huile de tournesol, d'huile de lin, et/ou d'huile de tournesol isomérisée.

La modification des bitumes par des polymères vise à améliorer notamment la résistance thermique, la cohésion, la capacité d'allongement, les caractéristiques viscoélastiques et l'adhésivité passive (meilleure résistance au désenrobage sur la chaussée) des revêtements bitumineux durcis. Ces bitumes-polymères sont aussi bien utilisés pour des enrobés/enduits anhydres que pour des enrobés/enduits comprenant des émulsions.

La modification des bitumes par des polymères est donc désormais incontournable, mais n'est pas sans poser de problèmes en termes de fabrication. En effet, les liants bitume-polymère sont obtenus par addition progressive d'un polymère à un bitume, à chaud, au sein d'un disperseur/broyeur mécanique. Cette opération qui a pour but de disperser le polymère au sein du bitume, est difficile à réaliser. Elle nécessite la mise en œuvre d'un disperseur/broyeur spécifique, performant et très coûteux. Elle requiert en outre de longues durées de dispersion/broyage, par exemple 1 à 3 heures.
Pour faciliter cette opération et obtenir une meilleure dispersion, il est connu d'utiliser une huile comptabilisante telle que une huile d'origine pétrolière, végétale ou minérale, par exemple à raison de 3 à 7% en poids par rapport au bitume.
Cette fabrication de bitume-polymère requiert donc une infrastructure non seulement lourde sur le plan économique, mais aussi impactante sur le plan environnemental.
Etant donné qu'il n'est pas possible de multiplier de telles infrastructures et eu égard au coût de transport de ces compositions bitume-polymère, des mélanges primaires bitume-polymère concentrés en polymère ont été développés.

FR2951188B1 divulgue ainsi une solution-mère bitume-polymère exempte d'huile d'origine pétrolière indésirable mais comprenant plutôt au moins une huile d'origine végétale et/ou animale, au moins 20% en masse de polymère, par rapport à la masse de la solution-mère, avec ou sans au moins un agent réticulant. Cette huile d'origine végétale et/ou animale est acide et son indice d'acide mesuré selon la norme NF EN ISO 660 est compris entre 50 et 300 mg KOH/g, par exemple entre 140 et 196 mg. Elle est choisie parmi les acides gras de l'huile de Tall ("tall oil") ou de l'huile de colza, prises seules ou en mélange.
Selon FR2951188B1, la solution-mère qu'il concerne est très fortement concentrée en polymère. De manière contradictoire, il est pourtant indiqué dans FR2951188B1 que "*la solution-mère selon l'invention comprend, de préférence, au moins 50% en masse de polymère",* et au paragraphe suivant, que cette concentration en polymère est, "*de préférence, de 20% à 50% en masse de polymère, par rapport à la masse de la solution-mère, de préférence de 25% à 45%, plus préférentiellement de 30% à 40%, encore plus préférentiellement de 32% à 35% et ce sans phénomène de gélification lors de sa préparation et*/*ou de son stockage".* Avec respectivement 25 et 40 % en masse de polymère, les exemples de FR2951188B1, SM₅ SM_{5bis} d'une part, et, SM₆ SM_{6bis} d'autre part, se situent donc dans la deuxième *"préférence".*
Il apparait donc que l'objectif du FR2951188B1 qui est d'obtenir une solution-mère bitume polymère très fortement concentrée en polymère, n'est pas réellement atteint.

WO02/10285 décrit des concentrés liquides secs destinés à être mélangés avec des bitumes et contenant des granulés de caoutchouc (55-95%) et d'huile de tall (45-5%).

Les mélanges huiles végétales-polymères de l'art antérieur sont perfectibles notamment en termes de mise en œuvre et d'impact sur les propriétés physico-chimiques des bitumes-polymères dans lesquels ils sont incorporés.

### Objectifs de l'invention

L'invention vise à perfectionner les mélanges huiles végétales-polymères de l'art antérieur et en particulier à satisfaire au moins l'un des objectifs suivants :
- fournir à un moindre coût de nouveaux mélanges primaires utiles pour la préparation de bitumes-polymères ;
- fournir à un moindre coût de nouveaux mélanges primaires utiles pour la préparation de bitumes-polymères, à haute concentration en polymère ;
- fournir à un moindre coût de nouveaux mélanges primaires utiles pour la préparation de bitumes-polymères, stables au stockage (absence de réagglomération) ;
- fournir à un moindre coût de nouveaux mélanges primaires utiles pour la préparation de bitumes-polymères, aptes à être aisément incorporés au bitume, c'est-à-dire, par exemple, rapidement et sans dispositifs lourds et sophistiqués de malaxage ;
- fournir à un moindre coût de nouveaux mélanges primaires utiles pour la préparation de bitumes-polymères, permettant d'obtenir des compositions bitume/polymère dotées de bonnes caractéristiques de consistance à l'état pâteux (pénétrabilité, température Bille et Anneau et faible susceptibilité), et de bonnes propriétés mécaniques à l'état solide/durci (retour élastique, cohésion et résistance en traction) ;
- fournir aisément et à un moindre coût de nouveaux bitumes-polymères obtenus à partir de mélanges primaires tels que définis dans les objectifs ci-dessus ;
- fournir aisément et à un moindre coût de nouvelles émulsions préparées à partir des bitumes-polymères tels que définis dans l'objectif ci-dessus ;
- fournir aisément et à un moindre coût de nouveaux enrobés ou enduits routiers, obtenus à partir des liants bitumineux ou des émulsions tels que définis dans les objectifs ci-dessus ;
- fournir des procédés simples et économiques de préparation des nouveaux produits tels que définis dans les objectifs ci-dessus.

### Description de l'invention

A cet effet, selon un premier aspect, l'invention propose un mélange primaire utile pour la préparation de compositions bitume/polymère, ledit mélange primaire comprenant :
(a) au moins 25 % en poids, de préférence de 25 à 80 % en poids, de polymère,
(b) au moins une résine tackifiante thermoplastique de masse moléculaire moyenne comprise entre 100 et 3 000 g/mol,
(c) et/ou un ou plusieurs (mono)esters alkyliques d'acides gras en C16-C18,;
   l'ester (c) étant nécessairement présent lorsque la résine tackifiante (b) a un indice d'acide mesuré selon la norme NF EN ISO 660 inférieur à 50 mg KOH/g.

Ces mélanges primaires sont fortement concentrés en polymère, stables au stockage, aisément manipulables et préparables, et respectueux des spécifications requises pour les bitumes-polymères qu'ils permettent d'obtenir facilement par mélange avec du bitume. Ces mélanges primaires sont donc une matière première avantageuse pour la fabrication de bitumes-polymères, notamment en ce qu'elle permet une réduction des coûts de transport et de logistique, puisque ces mélanges primaires peuvent être stockés et transportés sans dégradation à température ambiante, et donc dilués facilement dans du bitume, par la suite, sur le site de production de compositions bitume-polymère.

Eventuellement, l'ester (c) peut être obligatoirement présent dans le mélange primaire, dans le cas où le mélange (a)-(b) comprend de 55 à 95 % en poids de polymère (a) et de 45 à 5 % en poids d'huile de tall, à titre de résine (b).

Le mélange primaire peut être une masse/pâte en vrac non façonnée ou, suivant une caractéristique avantageuse de l'invention, être mis sous la forme d'éléments discrets tels que des granules, des berlingots ou des briques, cette mise en forme étant de préférence réalisée après extrusion.
Sous ces formes discrètes, le produit est aisé à manipuler à stocker et à transporter.
Elles favorisent en outre la dispersion dans le bitume du mélange primaire pour la préparation de bitumes-polymères.

Dans un premier mode de réalisation, le mélange primaire selon l'invention comprend les composants (a) et (b) dans les proportions suivantes en % en poids :
(a) de 25 à 55; de préférence de 30 à 50 ;
(b) de 75 à 45; de préférence de 70 à 50.

Dans un second mode de réalisation, le mélange primaire selon l'invention comprend les composants (a) et (c) dans les proportions suivantes en % en poids :
(a) de 25 à 80; de préférence de 30 à 70 ;
(c) de 75 à 20 ; de préférence de 70 à 30.

Dans un troisième mode de réalisation, le mélange primaire selon l'invention comprend les composants (a), (b) et (c) dans les proportions suivantes en % en poids :
(a) de 25 à 80 ; de préférence de 30 à 70 ;
(b) de 15 à 70 ; de préférence de 25 à 55 ;
(c) de 5 à 20 ; de préférence de 5 à 15.

### Polymère (a)

Le polymère (a) du mélange primaire est un polymère usuel des bitumes-polymères, à savoir les co ou homopolymères suivants, e.g.: les biopolymères d'origine végétale, animale et protéinique, les polybutadiènes, les polyisoprènes, les caoutchoucs butyle, les polyacrylates, les polymétacrylates, les polychloroprènes, les polynorbornènes, les polybutènes, les polyisobutènes, les polyéthylènes, les copolymères d'éthylène et d'acétate de vinyle, les copolymères d'éthylène et d'acrylate de méthyle, les copolymères d'éthylène et d'acrylate de butyle, les copolymères d'éthylène et d'anhydride maléique, les copolymères d'éthylène et de métacrylate de glycidyle, les copolymères d'éthylène et d'acrylate de glycidyle, les copolymères d'éthylène et de propène, les terpolymères éthylène/propène/diène (EPDM), les terpolymères acrylonitrile/butadiène/styrène (ABS), les terpolymères éthylène/acrylate ou méthacrylate d'alkyle/acrylate ou méthacrylate de glycidyle et notamment les terpolymères éthylène/acrylate de méthyle/méthacrylate de glycidyle et les terpolymères éthylène /acrylate ou méthacrylate d'alkyle/anhydride maléique et notamment les terpolymères éthylène/acrylate de butyle/anhydride maléique.
Le polymère (a) retenu est de préférence un copolymère de styrène et de butadiène de structure moléculaire linéaire ou étoilée, ayant une teneur en motifs styréniques comprise entre 5% et 50% en masse, par rapport à la masse totale des motifs butadiène, de préférence entre 10% et 40%, plus préférentiellement entre 15% et 30%, encore plus préférentiellement entre 20% et 30%. Sa masse moléculaire moyenne Mw peut être avantageusement comprise entre 50 000 et 800 000 daltons, de préférence entre 60 000 et 700 000, plus préférentiellement entre 80 000 et 500 000, encore plus préférentiellement entre 100 000 et 400 000, encore plus préférentiellement entre 110 000 et 300 000. La masse moléculaire du copolymère est mesurée par chromatographie GPC avec un étalon polystyrène selon la norme ASTM D3536.

Le mélange primaire peut, de manière connue en soi, contenir un agent réticulant du polymère (a). Classiquement, cet agent réticulant est choisi en fonction du ou des type(s) de polymère(s) contenu(s) dans le mélange primaire selon l'invention, par exemple :
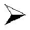 le soufre (soufre en fleur ou encore du soufre cristallisé alpha) ;
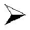 les polysulfures d'hydrocarbyle, pris seuls ou en mélange, en présence éventuelle d'accélérateurs de vulcanisation donneurs de soufre ou non donneurs de soufre, pris seuls ou en mélange ;
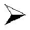 les composés de formule générale HS-R-SH où R représente un groupe hydrocarboné, saturé ou insaturé, linéaire ou ramifié, de 2 à 40 atomes de carbones, comprenant éventuellement un ou plusieurs hétéroatomes, tels que l'oxygène.

### Résines tackifiantes (b)

Pour parfaire ce mélange primaire, les inventeurs ont eu le mérite d'isoler :
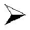 une 1^{ère} population de résines tackifiantes (b) particulièrement appropriée, à savoir celles ayant un indice d'acide IA mesuré selon la norme NF EN ISO 660 inférieur à 50 mg KOH/g, de préférence inférieur à - dans un ordre croissant de préférence- : 40 ; 30 ; 20 ; 10 ; 5 ; 4 ; 3 ; 2 ;
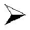 une 2^{ème} population de résines tackifiantes (b) particulièrement appropriée, à savoir les résines d'hydrocarbures ;
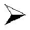 une 3^{ème} population de résines tackifiantes (b) particulièrement appropriée, à savoir les résines terpènes phénoliques ;
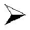 une 4^{ème} population de résines tackifiantes (b) particulièrement appropriée, à savoir celles ayant une viscosité à l'état fondu mesurée à 160°C comprise entre 100 et 5000 mPa.s, de préférence entre 300 et 3000 mPa.s ;
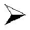 ladite résine (b) pouvant appartenir à au moins l'une des quatre populations susvisées.

Les résines tackifiantes (b) que l'on privilégie conformément à l'invention sont notamment :
▪ des résines terpène-phénol (Dertophene® T) d'indice d'acide compris entre 0,5 et 1,5; de Mw compris entre 500 et 1000 daltons, et dont la solubilité aromatique donnée par le point "Mixed Methylcyclohexane-Aniline Point (MMAP)" est comprise entre 10 et 50,
▪ des résines en C5 aliphatiques (Piccotac® 1095N) de IA compris entre 0,5 et 1,5 ; de Mw compris entre 1000 et 2500 daltons, et dont la solubilité aromatique donnée par le point "Mixed Methylcyclohexane-Aniline Point (MMAP)" est comprise entre 80 et 150,
▪ des résines en C5 aliphatiques modifiées par des motifs aromatiques (Piccotac® 7590N) d'indice d'acide compris entre 0,5 et 1,5; de Mw compris entre 1000 et 2500 daltons, et dont la solubilité aromatique donnée par le point "Mixed Methylcyclohexane-Aniline Point (MMAP)" est comprise entre 50 et 150,
▪ des résines aliphatiques (Escorez® 1310 LC) d'indice d'acide compris entre 10⁻³ et 0,1; de WCP compris 60°C et 90°C (79°C), de Mw compris entre 500 et 2500 daltons,
▪ des résines aliphatiques (Escorez 1310 LC) de WCP compris entre 100°C et 200°C, et de Mw compris entre 500 et 2500 daltons,
▪ et leurs mélanges.

### Composant (c)

Avantageusement, le ou les (mono)esters alkyliques d'acides gras en C16-C18, est/sont :
- un/des esters méthyliques d'acides gras en C16-C18 ;
- un/des esters d'huile de tournesol, d'huile de lin, d'huile de colza, d'huile de soja, et/ou d'huile de tournesol isomérisée ou non ;
- ou un/des esters méthyliques d'huile de tournesol, d'huile de lin, d'huile de colza, d'huile de soja, et/ou d'huile de tournesol isomérisée ou non.

Le composant (c) est en fait et de préférence une huile ou un mélange d'huiles contenant des acides gras au moins en partie (trans)estérifiés, avec au moins un alcool, *e.g.* un alcanol, tel que le méthanol, l'éthanol, le propanol, le butanol. Tout ou partie des acides gras de l'ester (c) sont avantageusement en C16-C18. L'huile ou les huiles du composant (c) est/sont préférablement d'origine végétale (tournesol, soja, lin ..). Un exemple d'ester (c) est le produit de la transestérification d'huile(s) de tournesol, de soja et/ou de lin, par le méthanol.

### Dispersibilité D du mélange primaire

Etant donné sa destination, le mélange primaire selon l'invention peut être défini au travers de sa dispersibilité D dans le bitume, mesurée par une méthode Md et exprimée par une durée en minutes au-delà de laquelle il n'y a plus de résidu de mélange primaire surnageant détectable visuellement, à la surface du bitume, sur les parois du contenant, après arrêt de l'agitation (vortex) :
D ≤ 60
de préférence D ≤ 40.

La méthode Md est définie dans les exemples ci-après.

Exprimée autrement, le mélange primaire selon l'invention, a avantageusement une dispersibilité D dans le bitume suffisamment élevée pour pouvoir être introduit directement dans un dispositif sous agitation et thermorégulé, sans recourir à l'utilisation d'un disperseur/broyeur et sans induire de perturbations.

On entend ici par "perturbation", par exemple, des remontées de particules de polymère en surface, la présence de résidus de mélange primaire mal dispersé, soit, une hétérogénéité du mélange final, qui est synonyme de baisse des performances thermomécaniques du bitume modifié au polymère.

### Procédé d'obtention du mélange primaire

Dans un autre de ses aspects, l'invention vise un procédé d'obtention d'un mélange primaire utile pour la préparation de compositions bitume/polymère, ce mélange primaire étant en particulier celui défini ci-dessus. Ce procédé est caractérisé en ce qu'il consiste essentiellement à extruder/mélanger :
(a) au moins un polymère,
(b) au moins une résine tackifiante,
(c) et/ou une ou plusieurs huiles, au moins partiellement transestérifiées ou non. (a) ; (b) ; (c) sont de préférence les composants définis supra.

Avantageusement, (c) est un ou des (mono)esters alkyliques d'acides gras en C16-C18, de préférence :
- un/des esters méthyliques d'acides gras en C16-C18 ;
- un/des esters d'huile de tournesol, d'huile de lin, d'huile de colza, d'huile de soja, et/ou d'huile de tournesol isomérisée ou non ;
- ou un/des esters méthyliques d'huile de tournesol, d'huile de lin, d'huile de colza, d'huile de soja, et/ou d'huile de tournesol isomérisée ou non.

Conformément à l'invention, l'extrusion est un mode préféré de mélange ou d'homogénéisation, parmi d'autres.

Le procédé préféré d'obtention du mélange primaire par extrusion peut être notamment mis en œuvre sur une extrudeuse bi-vis, comme cela est décrit plus en détail dans les exemples qui suivent.

### Bitume-polymère issu du mélange primaire selon l'invention et procédé de préparation de ce bitume-polymère

Dans encore un autre de ses aspects, l'invention vise un bitume-polymère préparé à partir d'un mélange primaire tel que défini supra.

Dans encore un autre de ses aspects, l'invention vise un procédé de préparation du bitume-polymère tel que défini supra, ce procédé étant caractérisé en ce qu'il consiste essentiellement à mélanger au moins un bitume avec au moins un mélange primaire tel que défini supra.
Parmi les mélangeurs utilisables, figurent les malaxeurs simples tels que ceux mis en œuvre dans les usines de fabrication des bitumes modifiés aux polymères ou autres, ou bien encore les extrudeuses.

Le bitume peut être sélectionné parmi les bitumes d'origine naturelle, comme ceux contenus dans des gisements de bitume naturel, d'asphalte naturel ou les sables bitumineux. Le bitume utilisable selon l'invention peut aussi être un bitume ou un mélange de bitumes provenant du raffinage du pétrole brut tels que des bitumes de distillation directe ou des bitumes de distillation sous pression réduite ou encore des bitumes soufflés ou semi-soufflés, des résidus de désasphaltage au propane ou au pentane, des résidus de viscoréduction, ces différentes coupes pouvant être prises seules ou en mélange. Les bitumes utilisés peuvent également être des bitumes fluxés par addition de solvants volatils, de fluxants d'origine pétrolière, de fluxants carbochimiques et/ou de fluxants d'origine végétale. On peut aussi utiliser des bitumes synthétiques également appelés bitumes clairs, pigmentables ou colorables. Le bitume peut être un bitume d'origine naphténique ou paraffinique, ou un mélange de ces deux bitumes.
Par exemple, le bitume est un bitume 160/220.

### Emulsions

Dans encore un autre de ses aspects, l'invention vise une émulsion préparée à partir du bitume-polymère susdéfini.
En pratique, le procédé et le dispositif de préparation de l'émulsion sont classiques. La méthodologie et les conditions générales préférées sont décrites dans les exemples ci-après.

### Revêtements

Dans encore un autre de ses aspects, l'invention vise un revêtement (e.g. enrobé ou enduit) routier, obtenu à partir du bitume-polymère ou de l'émulsion tels que définis ci-dessus.

L'invention sera mieux comprise à la lumière des exemples qui suivent.

### Exemples

### -I- Méthode Md de mesure de la dispersibilité D du mélange primaire dans du bitume

6,7 grammes de mélange primaire sont introduits dans 93,3 grammes de bitume 160/220 maintenu entre 160 et 170°C sous simple agitation mécanique par un agitateur à ailettes.
Le récipient est un contenant métallique de capacité 2 litres.
Le bitume 160/220 provient de la raffinerie ESSO à Port Jérôme - Gravanchon (76).
Les moyens de maintien en température sont constitués d'une plaque chauffante IKA-MAG HP10 associé à une sonde de température IKA ETS D5.
L'agitateur à ailettes est de type IKA RW20.
L'agitation simple est effectuée à une vitesse de 700 tr/min.
On mesure la durée D en minutes au-delà de laquelle il n'y a plus de résidu de mélange primaire surnageant détectable visuellement, à la surface du bitume, ni sur les parois du contenant. Le temps t0 pour la mesure de D correspond à la fin de l'introduction du mélange primaire dans le bitume.

### -II- Dispositifs & méthodes

1. Pour fabriquer les « mélanges primaires », c'est-à-dire sans bitume,
   ▪ Nous avons utilisé une extrudeuse bi-vis 50 D
   ▪ Débit = 4 kg/h
   ▪ Vitesse de rotation = 200 à 500 tr/min
   ▪ Profils des températures :
      i. Zone 1 (introduction des résines et/ou ester méthylique d'huile végétale) = 40°C à 160°C ;
      ii. Zone 2 (introduction polymère) = 120 à 160°C ;
      iii. Zones 3 et 4 (mélange/malaxage des constituants) = 120°C à 160°C.
2. Pour fabriquer les « bitumes-polymères », [essais 1 à 4 (tableau 1)], on met en œuvre la **Méthode Md** décrite ci-dessus.
3. Pour fabriquer les « émulsions à partir des bitumes-polymères », [essais 5 à 9 (tableau 2)] :
   ▪ On a utilisé un broyeur/disperseur Moritz BF50 ;
   ▪ La température de fabrication est comprise entre 160 et 180°C ;
   ▪ La pression retenue pour la confection des émulsions est de l'ordre de 1 bar.

### -III- Matières premières :

(a) Le polymère utilisé pour cette étude est le SBS ICO (linéaire) sous forme de poudre, 30 à 33 % de teneur en styrène, Allongement supérieur ou égal à 7%, dureté Shore A 70 à 80, résistance à la rupture (kg/m²) supérieur ou égal à 200, Mw comprise entre 150 000 et 250 000 g/mol.
(b) les résines tackifiantes
   ESCOREZ 1102 (fabriquée par Exxon Mobil)
   ESCOREZ 1310 (fabriquée par Exxon Mobil)
   DERTOPHENE T (fabriquée par DRT)
   PICCOTAC 1095 (fabriquée par Eastman)
   PICCOTAC 7590 (fabriquée par Eastman).
(c) Le composant (c) : Ester méthylique d'huiles végétales, par exemple Oléoflux® 18
(d) Emulsions de bitumes modifiées au polymère (a)
   Matières premières :
   Pour la phase bitumineuse, on utilisera le liant bitume-polymère initialement fabriqué contenant 4% de SBS, issu de la dissolution des mélanges primaires dans du bitume 160/220.
   Concernant la phase aqueuse, elle est composée de :
   - 29.32% d'eau
   - 0.25% d'émulsamine [60 (tensio-actif)
   - 0.21% de HCl commercial 33%
   - 0.2% de CaCl2
   - 0.02% de Coatex (viscodis 174) (épaississant)
   - qsp Ester méthylique d'huiles végétales

### -IV- Méthodes de mesure :

### -IV. 1 - bitume 160/220 ajouté aux mélanges primaires

1. La température de ramollissement bille et anneau (EN1427)
2. La mesure du point de fragilité FRAASS (EN12593)
3. Test de pénétrabilité à 25°C (EN1426)
4. La mesure du retour élastique (EN13398)
5. Viscosité Brookfield (EN13702)

### -IV.2- Emulsions

▪ Sur l'émulsion (phase bitume et phase aqueuse) essais 5 à 9 (tableau 2)
   - La teneur en eau (XPT60-080)
   - Le pH de l'émulsion et de la phase aqueuse (EN12850)
   - L'indice de rupture des émulsions cationiques (EN13075-1)
   - Les résidus sur tamis (EN 1429)
   - La pseudo-viscosité STV (EN 12846-2)
   - La stabilité au stockage à 7 jours
   - L'adhésivité sur gravillons séchés (EN13614)
   - Le diamètre médian émulsion LASER Mastersizer
▪ Sur le liant récupéré après évaporation de la phase aqueuse essais 5 à 9 (tableau 2)--> 2° partie de tableau
   - Pénétrabilité à 25°C (EN1426)
   - Température de ramollissement Bille-Anneau TBA (EN1427)
   - Retour élastique (EN13398)
   - Température FRAASS (EN12593)
   - Cohésion « Mouton pendule » (EN 13588)

### -V- Essais & Résultats :

Les essais 1 à 4 sont réalisés sur les mélanges primaires : tableau 1 (références 1 à 4).
Les essais 5 à 9 sont réalisés sur les émulsions : tableau 2 (références 5 à 9).

Les tableaux 1 & 2 ci-après donnent des conditions d'essais et les résultats obtenus pour les essais 1 à 9.

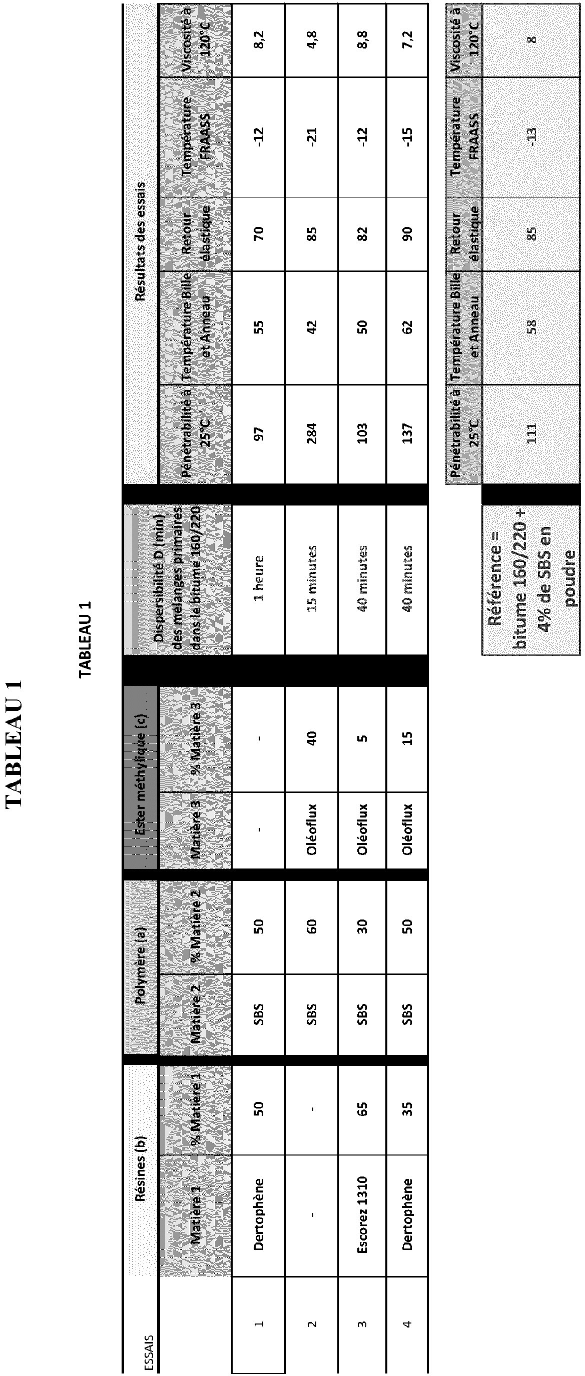

**TABLEAU 2**

| TABLEAU DE RESULTATS | | | | | |
|---|---|---|---|---|---|
| **N° Mélanges** | **5** | **6** | **7** | **8** | **9** |
| **Produits :** | **Emulsion de référence** | **Ester méthylique (40%) + SBS (60%)** | **Dertophène T (50%) + SBS (50%)** | **Dertophène T (45%) + Ester méthylique (5%) + SBS (50%)** | **Piccotac 1095 (65%) + Ester méthylique (15%) + SBS (30%)** |
| Références : | | | | | |
| Vitesse de dispersion des mélanges primaires dans le bitume | **2 h** | **15 min** | **1 h** | **40 min** | **40 min** |
| **Résultats d'essais** | | | | | |
| Résidu sur tamis de 0.50 mm % | **0,14** | **0,00** | **0,00** | **0,01** | **0,01** |
| Particules entre 0.50 mm et 0.16 mm % | **11,73** | **0,37** | **0,09** | **0,54** | **0,67** |
| | | | | | |
| Diamètre médian Laser Mastersizer 2000 (µm) | **9,5** | **4,3** | **4,0** | **5,3** | **3,6** |
| **Indice de rupture** | | | | | |
| * **mesuré avec fines Sikaïsol** (0.25 à 0.45 g/s fines, 25+/-1°C, 1t/s) | **97** | **58** | **57** | **75** | **69** |
| Pseudo viscosité STV 40°C 4mm (s) | **13** | **42** | **26** | **27** | **24** |
| **Stabilité au stockage 7 jours** par tamisage (tamis de 0,5 mm) | **-** | **0,00** | **0,00** | **0,02** | **0,00** |
| **Adhésivité** Résistance au désenrobage par l'eau (%) | **90** | **90** | **100** | **90** | **90** |

## Revendications

1. Mélange primaire utile pour la préparation de compositions bitume/polymère, ledit mélange primaire comprenant :
(a) au moins 25 % en poids, de préférence de 25 à 80 % en poids de copolymère de styrène et de butadiène de structure moléculaire linéaire ou étoilée, ayant une teneur en motifs styréniques comprise entre 5% et 50% en masse, par rapport à la masse totale des motifs butadiène;
(c) et un ou plusieurs (mono)esters alkyliques d'acides gras en C16-C18.

2. Mélange primaire selon la revendication 1, **caractérisé en ce qu'**il comprend :
(b) au moins une résine tackifiante thermoplastique de masse moléculaire moyenne comprise entre 100 et 3 000 g/mol.

3. Mélange primaire selon la revendication 1, **caractérisé en ce qu'**il comprend les composants (a) et (c) dans les proportions suivantes en % en poids :
(a) de 25 à 80 ; de préférence de 30 à 70 ;
(c) de 75 à 20 ; de préférence de 70 à 30.

4. Mélange primaire selon la revendication 1, **caractérisé en ce qu'**il comprend les composants (a), (b) et (c) dans les proportions suivantes en % en poids :
(a) de 25 à 80 ; de préférence de 30 à 70 ;
(b) de 15 à 70 ; de préférence de 25 à 55 ;
(c) de 5 à 20 ; de préférence de 5 à 15.

5. Mélange primaire selon l'une au moins des revendications 2 à 4, **caractérisé en ce que** la résine tackifiante (b) a un indice d'acide mesuré selon la norme NF EN ISO 660 et exprimé en mg KOH/g inférieur à - dans un ordre croissant de préférence- : 50 ; 40 ; 30 ; 20 ; 10; 5 ; 4 ; 3 ; 2.

6. Mélange primaire selon l'une au moins des revendications 2 à 4, **caractérisé en ce que** la résine tackifiante (b) est choisie parmi les résines d'hydrocarbures et/ou les résines terpènes phénoliques.

7. Mélange primaire selon l'une au moins des revendications précédentes, **caractérisé en ce que** le ou les (mono)esters alkyliques d'acides gras en C16-C18, est/sont :
• un/des esters méthyliques d'acides gras en C16-C18 ;
• un/des esters d'huile de tournesol, d'huile de lin, d'huile de colza, d'huile de soja, et/ou d'huile de tournesol isomérisée ou non ;
• ou un/des esters méthyliques d'huile de tournesol, d'huile de lin, d'huile de colza, d'huile de soja, et/ou d'huile de tournesol isomérisée ou non.

8. Mélange primaire selon l'une au moins des revendications précédentes, **caractérisé en ce qu'**il présente une dispersibilité D dans le bitume, mesurée par une méthode Md et exprimée par une durée en minutes au-delà de laquelle il n'y a plus de résidu de mélange primaire surnageant détectable visuellement, à la surface du bitume, ou sur les parois du contenant.
D ≤ 60 minutes
de préférence D ≤ 40 minutes

9. Mélange primaire selon l'une au moins des revendications précédentes, **caractérisé en ce qu'**il présente une dispersibilité D dans le bitume suffisamment élevée pour pouvoir être introduit directement sous agitation dans un dispositif thermorégulé.

10. Procédé d'obtention d'un mélange primaire utile pour la préparation de compositions bitume/polymère, ce mélange primaire étant celui défini dans au moins l'une au moins des revendications précédentes **caractérisé en ce qu'**il consiste essentiellement à extruder/mélanger :
(a) au moins un polymère,
(b) au moins une résine tackifiante,
(c) et/ou une ou plusieurs huiles, au moins partiellement transestérifiées ou non.

11. Bitume-polymère préparé à partir d'un mélange primaire tel que défini dans au moins l'une au moins des revendications 1 à 8.

12. Procédé de préparation d'une composition bitume-polymère, **caractérisé en ce qu'**il consiste essentiellement à mélanger au moins un bitume avec au moins un mélange primaire, ledit mélange primaire comprenant :
(a) au moins 25 % en poids, de préférence de 25 à 80 % en poids, de copolymère de styrène et de butadiène de structure moléculaire linéaire ou étoilée, ayant une teneur en motifs styréniques comprise entre 5% et 50% en masse, par rapport à la masse totale des motifs butadiène;
(c) et/ou un ou plusieurs (mono)esters alkyliques d'acides gras en C16-C18,.

13. Procédé selon la revendication 12 **caractérisé en ce que** le ou les (mono)esters alkyliques d'acides gras en C16-C18, est/sont :
• un/des esters méthyliques d'acides gras en C16-C18 ;
• un/des esters d'huile de tournesol, d'huile de lin, d'huile de colza, d'huile de soja, et/ou d'huile de tournesol isomérisée ou non ;
• ou un/des esters méthyliques d'huile de tournesol, d'huile de lin, d'huile de colza, d'huile de soja, et/ou d'huile de tournesol isomérisée ou non.

14. Emulsion préparée à partir du bitume-polymère selon la revendication 11 ou à partir d'un bitume et d'un mélange primaire tel que défini dans au moins l'une au moins des revendications précédentes.

15. Revêtement routier, obtenu à partir du bitume-polymère selon la revendication 11 ou de l'émulsion selon la revendication 14

## Patentansprüche

1. Primärgemisch, das für die Herstellung von Bitumen/Polymer-Zusammensetzungen geeignet ist, wobei das Primärgemisch:
(a) mindestens 25 Gew.-%, vorzugsweise 25 bis 80 Gew.-% Styrol-Butadien-Copolymer mit linearer oder sternförmiger Molekularstruktur, mit einem Gehalt an Styroleinheiten zwischen 5 und 50 Gew.-%, bezogen auf das Gesamtgewicht der Butadieneinheiten;
(c) und einem oder mehreren Alkyl(mono)ester(n) von C16-C18-Fettsäuren.

2. Primäre Mischung nach Anspruch 1, **dadurch gekennzeichnet, dass** sie beinhaltet:
(b) mindestens ein thermoplastisches klebrigmachendes Harz mit einem durchschnittlichen Molekulargewicht zwischen 100 und 3.000 g/mol.

3. Primäre Mischung nach Anspruch 1, **dadurch gekennzeichnet, dass** sie die Komponenten (a) und (c) in den folgenden Anteilen in Gew.-% enthält:
(a) von 25 bis 80; vorzugsweise von 30 bis 70;
(c) von 75 bis 20; vorzugsweise von 70 bis 30.

4. Primäre Mischung nach Anspruch 1, **dadurch gekennzeichnet, dass** sie die Komponenten (a), (b) und (c) in den folgenden Anteilen in Gew.-% enthält:
(a) von 25 bis 80; vorzugsweise von 30 bis 70;
(b) von 15 bis 70; vorzugsweise von 25 bis 55;
(c) von 5 bis 20; vorzugsweise von 5 bis 15.

5. Primärmischung nach mindestens einem der Ansprüche 2 bis 4, **dadurch gekennzeichnet, dass** das klebrigmachende Harz (b) eine nach NF EN ISO 660 gemessene und in mg KOH/g ausgedrückte Säurezahl von weniger als - in aufsteigender Reihenfolge der Präferenz - 50; 40; 30; 20; 10; 5; 4; 3; 2 aufweist.

6. Primäre Mischung nach mindestens einem der Ansprüche 2 bis 4, **dadurch gekennzeichnet, dass** das klebrigmachende Harz (b) ausgewählt ist aus Kohlenwasserstoffharzen und/oder phenolischen Terpenharzen.

7. Primäre Mischung nach mindestens einem der vorstehenden Ansprüche, **dadurch gekennzeichnet, dass** der (die) Alkyl(mono)ester von C16-C18-Fettsäuren ist (sind):
• Methylester von C16-C18-Fettsäuren;
• Ester von Sonnenblumenöl, Leinöl, Rapsöl, Sojaöl und/oder isomerisiertem oder nicht isomerisiertem Sonnenblumenöl;
• oder Methylester(n) von Sonnenblumenöl, Leinöl, Rapsöl, Sojaöl und/oder isomerisiertem oder nicht isomerisiertem Sonnenblumenöl.

8. Primärgemisch nach mindestens einem der vorstehenden Ansprüche, **dadurch gekennzeichnet, dass** es eine Dispergierbarkeit D in dem Bitumen aufweist, die nach einem Verfahren Md gemessen und durch eine Zeit in Minuten ausgedrückt wird, nach der es keinen visuell erkennbaren Rückstand des überstehenden Primärgemisches auf der Oberfläche des Bitumens oder an den Wänden des Behälters mehr gibt.
D ≤ 60 Minuten
vorzugsweise D ≤ 40 Minuten

9. Primärmischung nach mindestens einem der vorstehenden Ansprüche, **dadurch gekennzeichnet, dass** sie eine ausreichend hohe Dispergierbarkeit D im Bitumen aufweist, um direkt unter Rühren in eine temperaturgesteuerte Vorrichtung eingebracht werden zu können.

10. Verfahren zur Herstellung einer Primärmischung, die für die Herstellung von Bitumen/Polymer-Zusammensetzungen verwendbar ist, wobei diese Primärmischung diejenige ist, die in mindestens einem der vorstehenden Ansprüche definiert ist, **dadurch gekennzeichnet, dass** es im Wesentlichen darin besteht, zu extrudieren/zumischen:
(a) mindestens ein Polymer,
(b) mindestens ein klebrigmachendes Harz,
(c) und/oder ein oder mehrere, zumindest teilweise umgeesterte oder nicht umgeesterte Öle.

11. Polymerbitumen, hergestellt aus einem Primärgemisch nach mindestens einem der Ansprüche 1 bis 8.

12. Verfahren zur Herstellung einer Bitumen-Polymer-Zusammensetzung, **dadurch gekennzeichnet, dass** es im Wesentlichen darin besteht, mindestens ein Bitumen mit mindestens einem Primärgemisch zu mischen, wobei das Primärgemisch:
(a) mindestens 25 Gew.-%, vorzugsweise 25 bis 80 Gew.-%, Styrol-Butadien-Copolymer mit linearer oder sternförmiger Molekularstruktur mit einem Gehalt an Styroleinheiten zwischen 5 und 50 Gew.-%, bezogen auf das Gesamtgewicht der Butadieneinheiten;
(c) und/oder einem oder mehreren Alkyl(mono)ester(n) von C16-C18-Fettsäuren.

13. Verfahren nach Anspruch 12, **dadurch gekennzeichnet, dass** der/die Alkyl(mono)ester von C16-C18-Fettsäuren ist/sind:
• Methylester von C16-C18-Fettsäuren;
• Ester von Sonnenblumenöl, Leinöl, Rapsöl, Sojaöl und/oder isomerisiertem oder nicht isomerisiertem Sonnenblumenöl;
• oder Methylester(n) von Sonnenblumenöl, Leinöl, Rapsöl, Sojaöl und/oder isomerisiertem oder nicht isomerisiertem Sonnenblumenöl.

14. Emulsion, hergestellt aus dem Polymerbitumen nach Anspruch 11 oder aus einem Bitumen und einem Primärgemisch nach mindestens einem der vorstehenden Ansprüche.

15. Ein Straßenbelag, der aus dem Polymerbitumen nach Anspruch 11 oder der Emulsion nach Anspruch 14 hergestellt wird.

## Claims

1. Primary mixture for preparing bitumen-polymer compositions, said primary mixture comprising:
(a) at least 25% w/w, preferably from 25 to 80 % w/w of a styrene and butadiene copolymer with a linear or star molecular structure, having a proportion of styrene units of between 5% and 50% by mass with respect to the total mass of butadiene units,
(c) and one or several alkyyl-(mono)esters of a C16-C18 fatty acid.

2. Primary mixture according to claim 1, **characterized in that** it comprises:
(b) at least one thermoplastic tackifying resin with a mean molecular mass of between 100 and 3000 g/mol.

3. Primary mixture according to claim 1, **characterized in that** it comprises the components (a) and (c) in the following proportions in % w/w:
(a) from 25 à 80; preferably from 30 à 70;
(c) from 75 à 20; preferably from 70 à 30.

4. Primary mixture according to claim 1, **characterized in that** it comprises the components: (a), (b) and (c) in the following proportions in % w/w:
(a) from 25 a 80; preferably from 30 a 70;
(b) from 15 a 70; preferably from 25 a 55;
(c) from 5 a 20; preferably from 5 a 15.

5. Primary mixture according to at least one of the claims 2 to 4, **characterized in that** the tackifying resin (b) has an acid value, measured in accordance with NF EN ISO 660 and expressed in mg KOH/g, of less than in an increasing order of preference- : 50 ; 40 ; 30 ; 20 ; 10; 5 ; 4 ; 3 ; 2.

6. Primary mixture according to at least one of the claims 2 to 4, **characterized in that** the tackifying resin (b) is selected among hydrocarbon resins and/or phenolic terpene resins.

7. Primary mixture according to at least one of the preceding claims, **characterized in that** alkyl-(mono)ester(s) of C16-C18 fatty acids, is (are) :
• one or several methyl-(mono)esters of C16-C18 fatty acids;
• one or several esters of sunflower oil, linseed oil, rapeseed oil, soya oil, and/or sunflower oil isomerised or not;
• one or several methyl-esters of sunflower oil, linseed oil, rapeseed oil, soya oil, and/or sunflower oil isomerised or not.

8. Primary mixture according to at least one of the preceding claims, **characterized in that** it has a dispersability D in bitumen, measured by a method Md and expressed by a period in minutes beyond which there is no longer any residue of supernatant primary mixture detectable visually, on the surface of the bitumen, or on the walls of the container.
D ≤ 60 minutes
preferably D ≤ 40 minutes.

9. Primary mixture according to at least one of the preceding claims, **characterised in that** it has a dispersability D in bitumen that is sufficiently high to be able to be introduced directly under stirring in a thermoregulated device.

10. Method for obtaining a primary mixture useful for preparing bitumen/polymer compositions, this primary mixture being in particular the one defined in at least one of the preceding claims, **characterised in that** it consists essentially of extruding/mixing:
(a) at least one polymer,
(b) at least one tackifying resin
(c) and/or one or more oils, at least partially transesterified or not.

11. Polymer-bitumen prepared from a primary mixture as defined in at least one of the preceding claims 1 to 8.

12. Method for preparing a polymer-bitumen according to claim 10, **characterised in that** it consists essentially of mixing at least one bitumen with at least one primary mixture, said primary mixture comprising:
(a) at least 25% w/w, preferably from 25 to 80 % w/w of a styrene and butadiene copolymer with a linear or star molecular structure, having a proportion of styrene units of between 5% and 50% by mass with respect to the total mass of butadiene units,
(c) and one or several alkyyl-(mono)esters of a C16-C18 fatty acid.

13. Method according to claim 12 **characterized in that** alkyl-(mono)ester(s) of C16-C18 fatty acids, is (are):
• one or several methyl-(mono)esters of C16-C18 fatty acids;
• one or several esters of sunflower oil, linseed oil, rapeseed oil, soya oil, and/or sunflower oil isomerised or not;
• one or several methyl-esters of sunflower oil, linseed oil, rapeseed oil, soya oil, and/or sunflower oil isomerised or not.

14. Emulsion prepared from a polymer-bitumen according to claim 11, or from a bitumen and a primary mixture as defined in at least one of the preceding claims.

15. Road surfacing obtained from the polymer-bitumen according to claim 11 or from the emulsion according to claim 14.
